# EUROPEAN PATENT APPLICATION

(11) **EP 4 432 719 A1**
(43) Date of publication of application: **18.09.2024**
(21) Application number: 22889768.2
(22) Date of filing: 18.10.2022
(51) Int. Cl.: H04W 24/02, H04W 24/10

(54) **WIRELESS TERMINAL, RADIO ACCESS NETWORK NODE, AND METHODS THEREFOR**

(30) Priority: 08.11.2021 JP 2021182105
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: MacDougall, Alan John Shaw
(86) International application number: PCT/JP2022/038759
(87) International publication number: WO 2023/079947

(57) **Abstract**

A radio terminal (1) transmits assistance information to a network (2). The assistance information is used to train a first machine learning model related to radio access network (RAN) optimization or to perform inference on a first trained machine learning model related to RAN optimization. The assistance information includes one or both of statistical data and predicted data. The statistical data indicates a subset of historical data of a given event, extracted by filtering the historical data by one or more conditions. The predicted data is generated by the radio terminal (2) by prediction or decision using a second trained machine learning model. This helps, for example, to enable a radio terminal to provide a network with data suitable for training or inference in network-based machine learning.

## Description

### Technical Field

The present disclosure relates to radio communication networks, and in particular to the use of artificial intelligence (AI) in radio communication networks.

### Background Art

The 3rd Generation Partnership Project (3GPP (registered trademark)) is discussing the application or introduction of AI or machine learning (ML) to 5G. AI/ML can be considered for both network internal functions and air interfaces (i.e., Uu). In 3GPP Release 17, the Radio Access Network (RAN) Working Group #3 (RAN3) is discussing network-based AI/ML without User Equipment (UE) involvement, where examples of targets include energy saving, load balancing, and mobility optimization (see, for example, Non-Patent Literature 1 and 2). In network-based AI/ML, the network performs AI/ML inference. AI inference is a prediction or decision based on a trained machine learning model. AI/ML inference functionality may be located in the Next Generation Radio Access Network (NG-RAN) (e.g., gNB). The training of a machine learning model can be performed by the NG-RAN. Alternatively, Operation, Administration and Maintenance (OAM) can train a machine learning model and provide a trained machine learning model (i.e., trained parameters) to the NG-RAN (e.g., gNB).

In addition, network-based AI/ML with UE involvement and UE-based AI/ML have been proposed for 3GPP Release 18 (see, for example, Non-Patent Literature 3-5). In UE-based AI/ML, the UE performs AI/ML inference. Possible use cases for AL/ML for air interface include Channel State Information (CSI) feedback compression, beam management, positioning, Reference signal (RS) overhead reduction, and mobility. In UE-based AI/ML, the UE runs an AI model (i.e., a trained machine learning model) and obtains AI inference results locally. For example, the UE can predict a future event or measurement based on past measurements. The UE can feed back a predicted result (e.g., mobility or beam prediction) to the network (e.g., gNB).

### Citation List

### Non Patent Literature

[Non-Patent Literature 1] CMCC, "Revised SID: Study on enhancement for data collection for NR and ENDC", RP-201620, 3GPP TSG-RAN Meeting #89e, Electronic meeting, September 14-18, 2020
[Non-Patent Literature 2] 3GPP TR 37.817 V0.3.0 (2021-08) "3rd Generation Partnership Project; Technical Specification Group RAN; Evolved Universal Terrestrial Radio Access (E-UTRA) and NR; Study on enhancement for Data Collection for NR and EN-DC (Release 17)", September 23, 2021
[Non-Patent Literature 3] Ericsson, "Views on Rel-18 AI/ML on Air-Interface", RP-212346, 3GPP TSG-RAN Meeting#93e, Electronic meeting, September 13-17, 2021
[Non-Patent Literature 4] ZTE, "Support of Artificial Intelligence Applications for 5G Advanced", RP-212383, 3GPP TSG-RAN Meeting#93e, Electronic meeting, September 13-17, 2021
[Non-Patent Literature 5] Xiaomi, "Mobility enhancement by UE based AI", RP-211787, 3GPP TSG-RAN Meeting#93e, Electronic meeting, September 13-17, 2021

### Summary of Invention

### Technical Problem

The inventor has studied network-based AI/ML and found various problems. One of these problems concerns the training of a machine learning model to be used in a network or the inference on a trained machine learning model. Data obtained by the UE can be used as training data for a machine learning model to be used in the network. Additionally or alternatively, data obtained by the UE can be used by the network as input data to perform inference on a trained machine learning model. At present, however, there are not sufficient mechanisms for the UE to send data to the network that is suitable for use in network-based AI/ML training or inference.

One of the objects to be attained by example embodiments disclosed herein is to provide apparatuses, methods, and programs that contribute to solving at least one of a plurality of problems related to network-based AI/ML, including the problems described above. It should be noted that this object is merely one of the objects to be attained by the example embodiments disclosed herein. Other objects or problems and novel features will be made apparent from the following description and the accompanying drawings.

### Solution to Problem

In a first aspect, a radio terminal includes at least one memory and at least one processor coupled to the at least one memory. The at least one processor is configured to transmit assistance information to a network. The assistance information is used to train a first machine learning model related to radio access network optimization or to perform inference on a first trained machine learning model related to radio access network optimization. The assistance information includes one or both of statistical data and predicted data. The statistical data indicates a subset of historical data of a given event, extracted by filtering the historical data by one or more conditions. The predicted data is generated by the radio terminal by prediction or decision using a second trained machine learning model.

In a second aspect, a method performed by a radio terminal includes transmitting assistance information to a network. The assistance information is used to train a first machine learning model related to radio access network optimization or to perform inference on a first trained machine learning model related to radio access network optimization. The assistance information includes one or both of statistical data and predicted data. The statistical data indicates a subset of historical data of a given event, extracted by filtering the historical data by one or more conditions. The predicted data is generated by the radio terminal by prediction or decision using a second trained machine learning model.

In a third aspect, a radio access network (RAN) node includes at least one memory and at least one processor coupled to the at least one memory. The at least one processor is configured to receive assistance information from a radio terminal. The assistance information is used to train a first machine learning model related to radio access network optimization or to perform inference on a first trained machine learning model related to radio access network optimization. The assistance information includes one or both of statistical data and predicted data. The statistical data indicates a subset of historical data of a given event, extracted by filtering the historical data by one or more conditions. The predicted data is generated by the radio terminal by prediction or decision using a second trained machine learning model.

In a fourth aspect, a method performed by a RAN node includes receiving assistance information from a radio terminal. The assistance information is used to train a first machine learning model related to radio access network optimization or to perform inference on a first trained machine learning model related to radio access network optimization. The assistance information includes one or both of statistical data and predicted data. The statistical data indicates a subset of historical data of a given event, extracted by filtering the historical data by one or more conditions. The predicted data is generated by the radio terminal by prediction or decision using a second trained machine learning model.

A fifth aspect is directed to a program. The program includes a set of instructions (software codes) that, when loaded into a computer, cause the computer to perform the method described in the second or fourth aspect.

### Advantageous Effects of Invention

According to the aspects described above, it is possible to provide apparatuses, methods and programs that contribute to solving at least one of a plurality of problems related to network-based AI/ML.

### Brief Description of Drawings

Fig. 1 shows an example configuration of a radio communication system according to an example embodiment;
Fig. 2 is a sequence diagram showing an example of the operation of a radio terminal and a radio access network node according to an example embodiment;
Fig. 3 shows a specific example of a format of UE assistance information according to an example embodiment;
Fig. 4 is a sequence diagram showing an example of the operation of a radio terminal and a radio access network node according to an example embodiment;
Fig. 5 is a flowchart showing an example of the operation of a radio terminal according to an example embodiment;
Fig. 6 is a block diagram showing an example configuration of a radio terminal according to an example embodiment; and
Fig. 7 is a block diagram showing an example configuration of a radio access network node according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

The multiple example embodiments described below may be implemented independently or in combination, as appropriate. These example embodiments include novel features different from each other. Accordingly, these example embodiments contribute to attaining objects or solving problems different from one another and contribute to obtaining advantages different from one another.

The example embodiments shown below are described primarily for the 3GPP fifth generation mobile communication system (5G system). However, these example embodiments may be applied to other radio communication systems.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

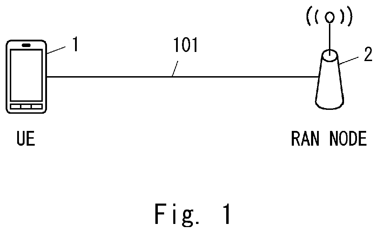

First, the configuration and operation of a plurality of network elements common to a plurality of example embodiments will be described. Fig. 1 illustrates an example of the configuration of a radio communication system related to a plurality of example embodiments. In the example of Fig. 1, the radio communication system includes a radio terminal (i.e., UE) 1 and a radio access network (RAN) node (e.g., gNB) 2. Each of the elements (network functions) shown in Fig. 1 can be implemented, for example, as a network element on dedicated hardware, as a software instance running on dedicated hardware, or as a virtualized function instantiated on an application platform.

The UE 1 has at least one radio transceiver and is configured to communicate wirelessly with the RAN node 2. The UE 1 is connected to the RAN node 2 via an air interface 101. The RAN node 2 is configured to manage a cell and to communicate wirelessly with multiple UEs, including the UE 1, using a cellular communication technology (e.g., NR Radio Access Technology (RAT)). The UE 1 may be simultaneously connected to multiple RAN nodes for Dual Connectivity (DC).

The RAN Node 2 may be a Central Unit (e.g., gNB-CU) in a Cloud RAN (C-RAN) deployment, or a combination of a CU and one or more Distributed Units (e.g., gNB-DUs). C-RAN is also referred to as CU/DU split. In addition, a CU may include a Control Plane (CP) unit (e.g., gNB-CU-CP) and one or more User Plane (UP) units (e.g., gNB-CU-UP). Accordingly, the RAN nodes 2 may be a CU-CP or a combination of a CU-CP and a CU-UP. A CU may be a logical node that hosts the Radio Resource Control (RRC), Service Data Adaptation Protocol (SDAP), and Packet Data Convergence Protocol (PDCP) protocols of a gNB (or the RRC and PDCP protocols of a gNB). A DU may be a logical node that hosts the Radio Link Control (RLC), Medium Access Control (MAC), and Physical (PHY) layers of a gNB.

The UE 1 may perform AI/ML inference locally. This AI/ML inference may relate to the optimization of a radio access network. The UE 1 may perform (or run) AI inference on a trained machine learning model and perform one or more actions according to a prediction or decision based on the AI inference. The machine learning model may be any model known in the field of machine learning, including deep learning. The machine learning model can be, for example, but not limited to, a neural network model, a support vector machine model, a decision tree model, a random forest model, or a K-nearest neighbor model.

By way of example, but not limitation, the prediction or decision based on AI inference by the UE 1 and the one or more actions triggered thereby relate to at least one of beam management, mobility, CSI feedback, or positioning (or location estimation). By way of example, but not limitation, the one or more actions include at least one of cell reselection, sending a measurement report, performing conditional mobility, or downlink beam selection. The downlink beam may be a Synchronization Signal (SS)/Physical Broadcast Channel (PBCH) block (SSB) beam. For example, the machine learning model may output predictions of a candidate cell for cell reselection, a target cell or node for handover, a candidate cell or node for conditional mobility, a candidate beam for beam selection, or a UE trajectory. Additionally or alternatively, the machine learning model may predict or determine when to perform an action for mobility or beam management.

The cell reselection may be performed when the UE 1 is in RRC_IDLE or RRC_INACTIVE.

Th mobility can be performed when the UE 1 is in RRC_CONNECTED. The mobility in RRC_CONNECTED may be a handover. The handover may be a Dual Active Protocol Stack (DAPS) handover. Additionally or alternatively, the mobility in RRC_CONNECTED can be related to various mobilities in DC. Specifically, the mobility may be a change of the primary cell of a Master Cell Group (MCG) in DC, an inter-Master Node (MN) handover in DC, a secondary node change in DC, or an addition or modification of the primary cell of a secondary cell group in DC.

The conditional mobility can be performed when the UE 1 is in RRC_CONNECTED. The conditional mobility may be a conditional handover. Additionally or alternatively, the conditional mobility may be related to various mobility in DC. Specifically, the conditional mobility may be a change of the primary cell of a Master Cell Group (MCG) in DC, an inter-Master Node (MN) handover in DC, a change of a secondary node in DC, or an addition or modification of the primary cell of a secondary cell group in DC.

The downlink beam selection can be done in a Beam Failure Recovery (BFR) procedure.

Training of the machine learning model for AI/ML inference by the UE 1 may be performed by the UE 1 or by the network (e.g., OAM, RAN node 2). The method of this training can be offline training, online training, or a combination of both.

Similarly, the RAN node 2 may perform AI/ML inference. This AI/ML inference may relate to the optimization of a radio access network. The RAN node 2 may perform (or run) AI inference on a trained machine learning model and perform one or more actions according to a prediction or decision based on the AI inference. The machine learning model may be any model known in the field of machine learning, including deep learning. The machine learning model can be, for example, but not limited to, a neural network model, a support vector machine model, a decision tree model, a random forest model, or a K-nearest neighbor model.

By way of example, but not limitation, the prediction or decision based on AI inference by the RAN node 2 and the one or more actions triggered thereby may relate to at least one of energy saving, load balancing, mobility optimization, CSI feedback enhancement, or positioning accuracy enhancement. For example, the prediction or decision by the machine learning model may relate to one or both of energy saving strategies and mobility strategies. For mobility strategies, the machine learning model may output predictions of a target cell or node for handover, a candidate cell or node for conditional mobility, or a UE trajectory.

Training of the machine learning model for AI/ML inference by the RAN node 2 may be performed by the RAN node 2 or by the OAM. The method of this training can be offline training, online training, or a combination of both.

### First Example Embodiment

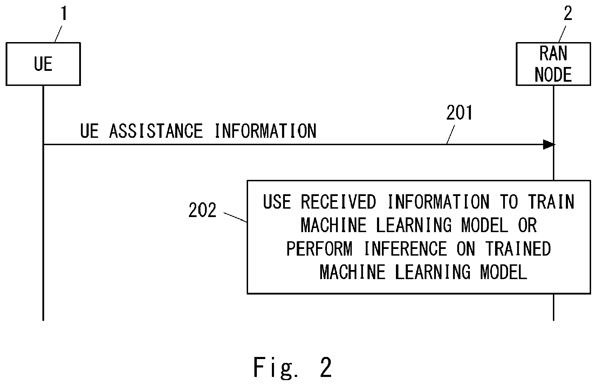

An example of the configuration of a radio communication system according to this example embodiment may be similar to the example shown in Fig. 1. Fig. 2 shows an example of the operation of the UE 1 and RAN node 2 for network-based AI/ML, i.e., for the network (e.g., RAN node 2) to perform AI inference on a machine learning model. In step 201, the UE 1 transmits UE assistance information to the RAN node 2. The RAN node 2 may request the UE 1 to transmit the UE assistance information. The UE 1 may transmit the UE assistance information in response to the request from the RAN node 2.

The UE assistance information is used in the network (e.g., RAN node 2, or OAM) to train a machine learning model related to radio access network optimization or to perform inference on a trained machine learning model related to radio access network optimization. In one example, as shown in Fig. 2, the RAN node 2 may use the UE assistance information received from the UE 1 to train a machine learning model or to perform inference on a trained machine learning model. The UE assistance information may be used as part of the training data for training a machine learning model used in the network (e.g., RAN node 2). The UE assistance information may be used to generate the training data. The UE assistance information may be used as input data for performing inference on a trained machine learning model in the network (e.g., RAN node 2). The UE assistance information may be used to generate input data to be fed into a trained machine learning model. The UE assistance information includes one or both of statistical data and predicted data.

The term "(for) training a machine learning model" may be paraphrased as "(for) collecting or updating training data in a machine learning model", "(for) learning (machine learning-based) artificial intelligence", "(for) improving or enhancing the accuracy of inference by artificial intelligence", "(for) machine learning", or "(for) artificial intelligence". The term " performing inference on a trained machine learning model" may be paraphrased as "performing inference by artificial intelligence (using a trained machine learning model)", "performing inference by (machine learning-based) artificial intelligence", "performing machine learning", or "performing artificial intelligence". The term "prediction or decision using a trained machine learning model by a radio terminal" may be paraphrased as "prediction or decision based on machine learning by a radio terminal (e.g., UE)", "prediction or result derived by machine learning", or "prediction or decision by (machine learning-based) artificial intelligence". The term " radio access network optimization" may mean, for example, optimization of functions or processing of a radio network (e.g., one or more RAN nodes), or optimization of values or configurations of radio parameters that a radio network configures for a radio terminal (e.g., one or more UEs).

The statistical data indicates a subset of historical data of a given event, extracted by filtering the historical data by one or more conditions. The historical data may indicate a history of success or failure of mobility or beam selection by the UE 1. The historical data may indicate a history of beam management. The historical data may include one or more of a Beam Failure Detection (BFD) history, a Beam Failure Recovery (BFR) history, and a Radio Link Failure (RLF) history. In other words, the given event may be mobility or beam selection (or beam management) of the UE 1. As described above, the mobility may be mobility in RRC_CONNECTED (e.g., handover, conditional handover, primary cell change in the MCG, and conditional primary cell change in the MCG). Additionally or alternatively, the mobility may be mobility (i.e., cell reselection) in RRC_IDLE or RRC_INACTIVE. The one or more conditions for filtering the historical data may include one or more conditions related to one or more of the location, movement speed, serving beam, serving cell, and serving frequency band of the UE 1.

More specifically, the one or more conditions for filtering the historical data may include one or more conditions relating to a mobility pattern of the UE 1. The UE 1 may extract from the recorded (or archived) historical data a subset of historical data corresponding to the same or similar mobility patterns as those specified in the condition(s). The mobility pattern may indicate one or any combination of a pair of source and target cells, a pair of source and target cell frequency bands, UE position, UE speed, and a downlink beam.

Additionally or alternatively, the one or more conditions for filtering the historical data may include one or more conditions relating to a network slice used by the UE 1. The UE 1 may extract from the recorded (or archived) historical data a subset of historical data corresponding to the same or similar network slice, slice group, or slice type as that specified in the condition(s).

Additionally or alternatively, the one or more conditions for filtering the historical data may include one or more conditions relating to a radio configuration of the UE 1. The UE 1 may extract from the recorded (or archived) historical data a subset of historical data corresponding to the same or similar radio configuration as specified in the condition(s). For example, the radio configuration may be a mobility related parameter. More specifically, the radio configuration may be a particular value of a particular offset, a particular frequency priority, or a particular execution condition for conditional mobility.

On the other hand, the predicted data is generated by a prediction or decision using a machine learning model by the UE 1. In other words, the predicted data is generated based on an inference result of UE-based AI/ML in the UE 1. The predicted data may be real-time data that is sent to the network (e.g., RAN node 2) in response to the predicted data being generated. The real-time data may be used as input data for performing network-based AI/ML inference by the network. The real-time data may indicate the position or trajectory of the UE 1 as predicted by a machine learning model implemented in the UE 1. The real-time data may indicate a candidate target cell or candidate downlink beam predicted by a machine learning model implemented in the UE 1.

Additionally or alternatively, the predicted data generated based on the UE-based AI/ML inference results at the UE 1 may be recorded (or archived) data. The recorded data may be used as training data for a machine learning model used in the network. Additionally or alternatively, the recorded data may be used as input data for network-based AI/ML inference runs by the network.

The recorded data may indicate the position or trajectory of the UE 1 as predicted by a machine learning model implemented in the UE 1. The recorded data may indicate a candidate target cell or candidate downlink beam as predicted by a machine learning model implemented in the UE 1. The recorded data may indicate a mobility execution timing as predicted by a machine learning model implemented in the UE 1. The recorded data may indicate a downlink beam determined by beam selection using a machine learning model implemented in the UE 1.

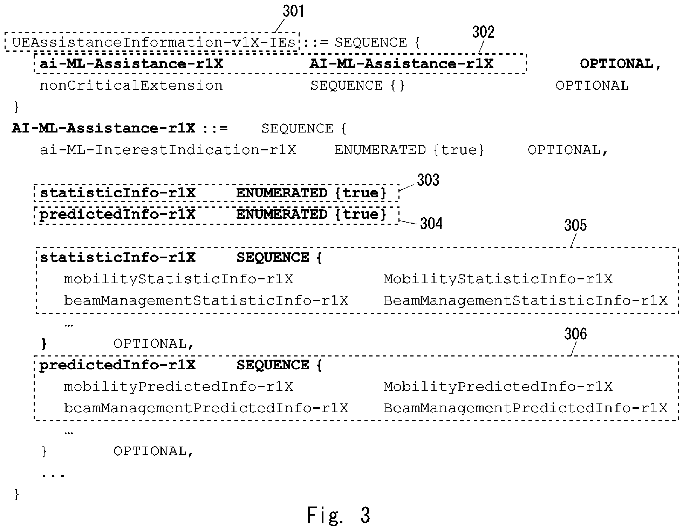

Fig. 3 shows an example of the format of the UE assistance information. An ai-ML-Assistance Information Element (IE) 302 shown in Fig. 3 corresponds to the UE assistance information regarding AI. The ai-ML-Assistance IE 302 may be included in a UEAssistanceInformation IE 301. The UEAssistanceInformation IE 301 may be transmitted to the RAN node 2 via an RRC message (e.g., RRC Setup Request, RRC Setup Complete, RRC Resume Request, RRC Resume Complete, RRC Re-establishment Request, RRC Re-establishment Complete).

The ai-ML-Assistance IE 302 may include a statisticInfo IE 303 or 305. The statisticInfo IE 303 indicates that the UE 1 has statistical data or that the UE 1 can report statistical data. On the other hand, the statisticInfo IE 305 specifies specific statistical data that can be sent by the UE 1 to the RAN node 2.

The ai-ML-Assistance IE 302 may include a predictedInfo IE 304 or 306. The predictedInfo IE 304 indicates that the UE 1 has predicted data or that the UE 1 can report predicted data. On the other hand, the predictedInfo IE 306 specifies specific predicted data that can be sent by the UE 1 to RAN node 2.

According to the behavior of the UE 1 and the RAN node 2 described with reference to Fig. 2 and Fig. 3, the UE 1 can provide the network with data suitable for training or inference of network-based

### AI/ML.

### Second Example Embodiment

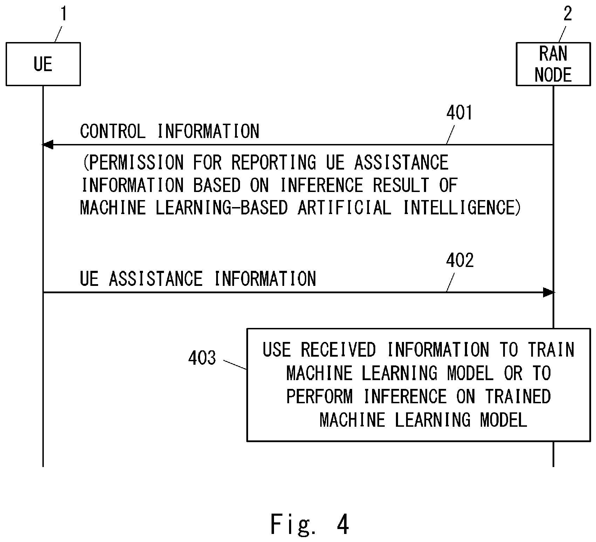

An example of the configuration of a radio communication system according to this example embodiment may be similar to the example shown in Fig. 1. Fig. 4 shows an example of the operation of the UE 1 and RAN node 2 for network-based AI/ML, i.e., for the network (e.g., RAN node 2) to perform AI inference on a machine learning model. In step 401, the RAN node 2 transmits control information to the UE 1. The control information may be transmitted via broadcast (e.g., system information). The system information may be any System Information Block. Alternatively, the control information may be transmitted via dedicated signaling for the UE 1. The dedicated signaling may be dedicated RRC signaling, e.g., RRC Reconfiguration message, RRC Reestablishment message, RRC Resume message, or RRC Setup message. The control information may be an information element contained in an SIB or in dedicated RRC signaling. For example, but not limited to, the name of the information element may be "AI configuration".

The control information indicates whether or not the UE 1 is allowed to send to the network (e.g., RAN node 2) UE assistance information indicating predicted data based on a prediction or decision by the UE 1 using a machine learning model. The predicted data in this example embodiment is similar to the predicted data described in the first example embodiment.

The control information may indicate a condition under which the transmission of the UE assistance information indicating the predicted data is allowed. In this case, only if the indicated condition is met, the UE 1 may transmit the UE assistance information indicating the predicted data to the network. Alternatively, the control information may indicate a condition under which the collection of predicted data is allowed. In this case, only if the indicated condition is met, the UE 1 may collect predicted data based on AI/ML inference results. In other words, the UE 1 may include in the UE assistance information only predicted data obtained while the indicated condition is met. The condition may indicate a restriction with respect to at least one of a frequency band, a location, or a time.

For example, the condition may specify a location (e.g., a geographic area, logical area, cell, or set of cells) where the UE 1 is allowed to collect or report predicted data based on AI/ML inference results. The condition may specify a time or time period during which the collection or reporting of predicted data is allowed. The condition may specify one or more frequency bands in which predicted data is allowed to be collected or reported.

Additionally or alternatively, the condition may be that a consistent failure has been detected. For example, the condition may allow the UE 1 to collect or report predicted data based on AI/ML inference results if a given failure is repeatedly detected under the same or similar circumstances (e.g., location, cell, cell pair, time, frequency band, time). The given failure may be, for example, a handover failure or a beam failure. The circumstances can be at least one of location, cell, cell pair, time, frequency band, or time.

Additionally or alternatively, the condition may be that the UE 1 has received a signal from the network (e.g., RAN node 2) indicating a predetermined identifier. The predetermined identifier may be, for example, but not limited to, a Config Set Number or ID, an AI Set Number or ID, or a Combination Set Number or ID. The predetermined identifier may be configured by the network to represent the same or similar situation (e.g., transmit power, antenna tilt, number of downlink beams, or other physical layer settings of the RAN node 2).

Steps 402 and 403 in Fig. 4 are similar to steps 201 and 202 in Fig. 2. except that in step 402, the UE 1 transmits the UE assistance information indicating the predicted data to the RAN node 2, if the control information in step 401 allows.

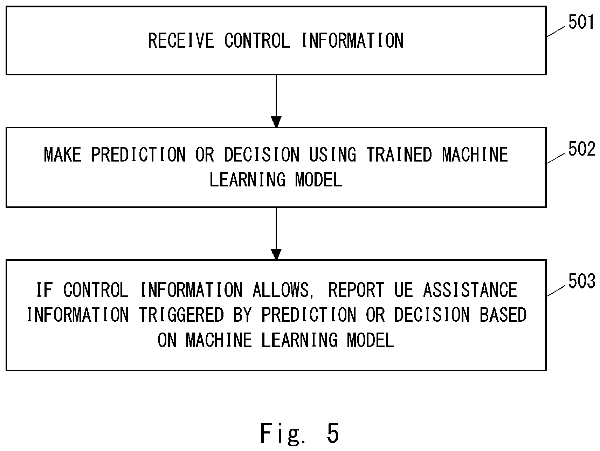

Fig. 5 shows an example of the operation of the UE 1. In step 501, the UE 1 receives the control information described above. In step 502, the UE 1 makes a prediction or decision using a trained machine learning model. In step 503, if the control information allows, the UE 1 transmits to the RAN node 2 the UE assistance information indicating the predicted data obtained by the UE 1 through the inference with the machine learning model. In other words, if the control information allows, the UE 1 reports to the network the UE assistance information triggered by the prediction or decision at the UE 1 based on the machine learning model.

According to the behavior of the UE 1 and the RAN node 2 described with reference to Fig. 4 and Fig. 5, the RAN node 2 can control whether the UE 1 is allowed to report predicted data obtained based on a prediction or decision by the UE-based AI/ML.

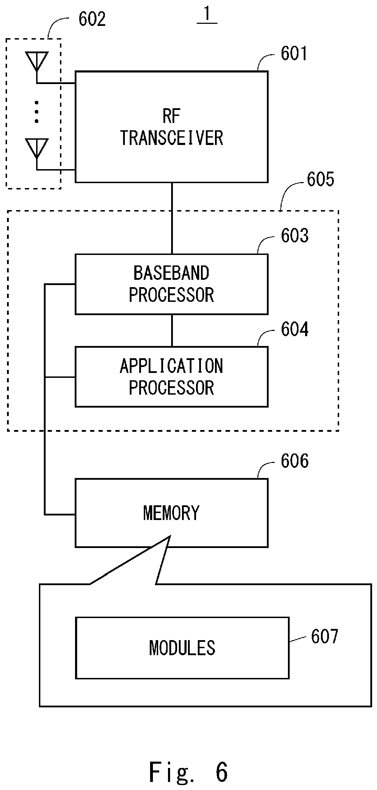

The following provides configuration examples of the UE 1 and the RAN node 2 according to the above described example embodiments. Fig. 6 is a block diagram showing an example configuration of the UE 1. The radio frequency (RF) transceiver 601 performs analog RF signal processing to communicate with a RAN node. The RF transceiver 601 may include a plurality of transceivers. The analog RF signal processing performed by the RF transceiver 601 includes frequency up-conversion, frequency down-conversion, and amplification. The RF transceiver 601 is coupled to the antenna array 602 and the baseband processor 603. The RF transceiver 601 receives modulation symbol data (or OFDM symbol data) from the baseband processor 603, generates a transmission RF signal, and supplies the transmission RF signal to the antenna array 602. The RF transceiver 601 generates a baseband reception signal based on the reception RF signal received by the antenna array 602 and supplies the baseband reception signal to the baseband processor 603. The RF transceiver 601 may include an analog beamformer circuit for beamforming. The analog beamformer circuit includes, for example, a plurality of phase shifters and a plurality of power amplifiers.

The baseband processor 603 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 603 may include signal processing in the Service Data Adaptation Protocol (SDAP) layer, Packet Data Convergence Protocol (PDCP) layer, Radio Link Control (RLC) layer, Medium Access Control (MAC) layer, and Physical (PHY) layer. The control-plane processing performed by the baseband processor 603 may also include processing of Non-Access Stratum (NAS) protocols, Radio Resource Control (RRC) protocols, MAC Control Elements (CEs), and Downlink Control Information (DCIs).

The baseband processor 603 may perform Multiple Input Multiple Output (MIMO) encoding and precoding for beamforming.

The baseband processor 603 may include a modem processor (e.g., Digital Signal Processor (DSP)) that performs the digital baseband signal processing and a protocol stack processor (e.g., Central Processing Unit (CPU) or Micro Processing Unit (MPU)) that performs the control-plane processing. In this case, the protocol stack processor performing the control-plane processing may be integrated with an application processor 604 described later.

The application processor 604 may also be referred to as a CPU, an MPU, a microprocessor, or a processor core. The application processor 604 may include a plurality of processors (processor cores). The application processor 604 loads a system software program (Operating System (OS)) and various application programs (e.g., a voice call application, a web browser, a mailer, a camera operation application, a music player application) from a memory 606 or from another memory (not shown) and executes these programs, thereby providing various functions of the UE 1.

In some implementations, as represented by the dashed line (605) in Fig. 6, the baseband processor 603 and the application processor 604 may be integrated on a single chip. In other words, the baseband processor 603 and the application processor 604 may be implemented in a single System on Chip (SoC) device 605. A SoC device may be referred to as a system Large Scale Integration (LSI) or a chipset.

The memory 606 is a volatile memory or a non-volatile memory, or a combination thereof. The memory 606 may include a plurality of physically independent memory devices. The volatile memory is, for example, Static Random Access Memory (SRAM), Dynamic RAM (DRAM), or a combination thereof. The non-volatile memory may be a Mask Read Only Memory (MROM), an Electrically Erasable Programmable ROM (EEPROM), a flash memory, a hard disk drive, or any combination thereof. The memory 606 may include, for example, an external memory device that can be accessed by the baseband processor 603, the application processor 604, or the SoC 605. The memory 606 may include an internal memory device that is integrated into the baseband processor 603, the application processor 604, or the SoC 605. Further, the memory 606 may include a memory in a Universal Integrated Circuit Card (UICC).

The memory 606 may store one or more software modules (computer programs) 607 including instructions and data for processing by the UE 1 described in the above example embodiments. In some implementations, the baseband processor 603 or the application processor 604 may load the software module(s) 607 from the memory 606 and execute the loaded software module(s) 607, thereby performing the processing of the UE 1 described in the above example embodiments with reference to the drawings.

The control-plane processing and operations performed by the UE 1 described in the above embodiments can be achieved by elements other than the RF transceiver 601 and the antenna array 602, i.e., achieved by the memory 606, which stores the software modules 607, and one or both of the baseband processor 603 and the application processor 604.

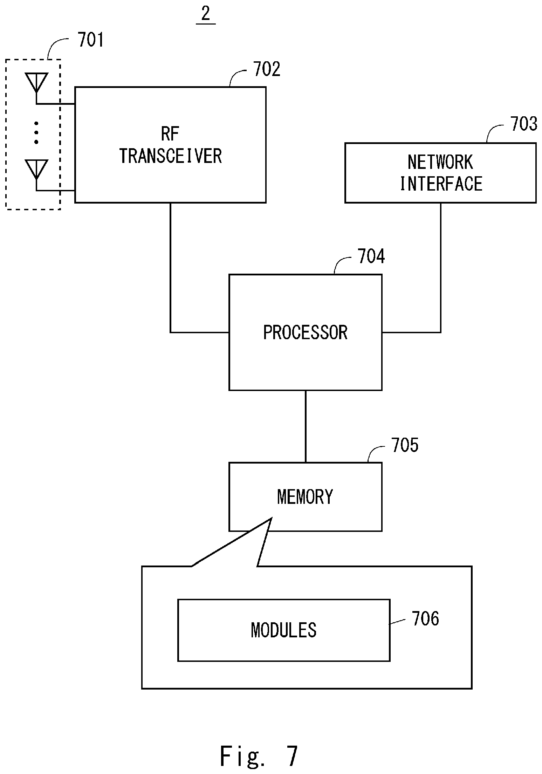

Fig. 7 is a block diagram showing an example configuration of the RAN node 2 according to the above example embodiments. Referring to Fig. 7, the RAN node 2 includes a Radio Frequency transceiver 701, a network interface 703, a processor 704, and a memory 705. The RF transceiver 701 performs analog RF signal processing to communicate with UEs including the UE 1. The RF transceiver 701 may include a plurality of transceivers. The RF transceiver 701 is coupled to an antenna array 702 and the processor 704. The RF transceiver 701 receives modulated symbol data from the processor 704, generates a transmission RF signal, and supplies the transmission RF signal to the antenna array 702. Further, the RF transceiver 701 generates a baseband reception signal based on a reception RF signal received by the antenna array 702 and supplies the baseband reception signal to the processor 704. The RF transceiver 701 may include an analog beamformer circuit for beam forming. The analog beamformer circuit includes, for example, a plurality of phase shifters and a plurality of power amplifiers.

The network interface 703 is used to communicate with network nodes (e.g., SN 2, and control and transfer nodes in the core network). The network interface 703 may include, for example, a network interface card (NIC) conforming to the IEEE 802.3 series.

The processor 704 performs digital baseband signal processing (i.e., data-plane processing) and control-plane processing for radio communication. The processor 704 may include a plurality of processors. The processor 704 may include, for example, a modem processor (e.g., Digital Signal Processor (DSP)) that performs digital baseband signal processing and a protocol stack processor (e.g., Central Processing Unit (CPU) or Micro Processing Unit (MPU) that performs the control-plane processing. The processor 704 may include a digital beamformer module for beam forming. The digital beamformer module may include a Multiple Input Multiple Output (MIMO) encoder and a precoder.

The memory 705 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disk drive, or any combination thereof. The memory 705 may include a storage located that is separate from the processor 704. In this case, the processor 704 may access the memory 705 through the network interface 703 or an I/O interface not shown.

The memory 705 may store one or more software modules (computer programs) 706 including instructions and data for performing the processing of the RAN node 2 described in the above example embodiments. In some implementations, the processor 704 may be configured to load these software modules 706 from the memory 705 and execute the loaded software modules, thereby performing the processing of the RAN node 2 described in the above example embodiments.

If the RAN node 2 is a CU (e.g., gNB-CU) or CU-CP (e.g., gNB-CU-CP), the RAN node 2 does not need to include the RF transceiver 701 (and antenna array 702).

As described using Figs. 6 and 7, each of the processors in the UE 1 and RAN node 2 according to the example embodiments described above can execute one or more programs, containing a set of instructions, for causing a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, but not limitation, transitory computer readable media or communication media can include electrical, optical, acoustical, or other form of propagated signals.

### Other Example Embodiments

The example embodiments described above can be applied to Non-Terrestrial Networks (NTNs). The above example embodiments can be applied to various emerging applications, such as vehicle-to-everything (V2X), high-speed trains (HSTs), unmanned aerial vehicles (UAVs), uncrewed aerial vehicles (UAVs), urban air mobility (UAM).

In the example embodiments described above, the UE 1 may send an AI interest indication (e.g., ai-ML-InterestIndication) during an RRC connection setup, resume, or reestablishment procedure. The RAN node 2 may request the UE 1 to send the AI Interest Indication. The AI interest indication may indicate that the UE 1 supports the ability to send information (UE assistance information) to the RAN node 2 that is necessary (or useful) for performing AI inference (AI/ML prediction) on a machine learning model in the RAN node 2. Additionally or alternatively, the AI interest indication may indicate to the RAN node 2 that the UE 1 is interested in transmitting (or providing) UE assistance information. The AI interest indication may indicate a category of AI/ML inference that the UE 1 wishes to perform (or contribute to). In other words, the AI interest indication may indicate an action or category of actions for which the UE 1 wishes to be allowed to provide UE assistance information. The AI interest indication may indicate a function or feature (e.g., mobility, power saving) for which the UE 1 wishes to be allowed to provide UE assistance information. The AI interest indications may indicate a sub-function or sub-feature (e.g., cell selection, handover, beam management) for which the UE 1 wishes to be allowed to provide UE assistance information. The AI interest indication may indicate a procedure (e.g., RRC reestablishment, beam failure recovery (BFR)) for which the UE 1 wishes to be allowed to provide UE assistance information. The AI interest indication may indicate an RRC configuration (e.g., the level of information elements or fields in Abstract Syntax Notation One (ASN.1)) for which the UE 1 wishes to be allowed to provide UE assistance information.

The example embodiments described above can be applied to a Secondary Cell Group (SCG) in Dual Connectivity (e.g., Multi-Radio Dual Connectivity (MR-DC)). In this case, the RAN node 2 may be a secondary node (Secondary Node (SN)). In this case, the SN can send and receive RRC messages to and from the UE 1, directly in the SCG using a signaling radio bearer (SRB3), or via the Master Node (MN). Additionally or alternatively, the RAN node 2 may be a Master Node (MN) and be responsible for forwarding RRC messages between the SN and the UE 1.

The RAN node 2 in the example embodiments described above may be realized in a C-RAN deployment. For example, the RAN node 2 may include a CU (e.g., gNB-CU) and a DU (e.g., gNB-DU). The CU may request the UE 1 to send the UE assistance information, and may receive (via the DU) the UE assistance information from the UE 1. The CU may perform radio network optimization based on the UE assistance information. In addition, the CU may send at least part of the UE assistance information, or control information derived from (or in response to receiving) the UE assistance information, to the DU. The DU may perform radio network optimization based on the information sent by the CU (i.e., received by the DU). For example, the radio network optimization performed by the CU may be the optimization of radio parameters (e.g., Radio Bearer Config) configured by the CU1 for the UE 1. The radio network optimization performed by the DU may be the optimization of radio parameters (e.g., Cell Group Config, measurement gap) configured by the DU for the UE 1. Depending on the objective of the radio network optimization or the type and content of the requested UE assistance information, the above mentioned control by the CU and DU may be selected or combined.

The RAN node 2 in the example embodiments described above may transmit at least part of the UE assistance information to one or more other network nodes. The other network nodes may include, for example, one or both of Operation Administration and Maintenance (OAM) and RAN Intelligent Controller (RIC). The RIC may be one that is being considered by a standards body (e.g., the Open RAN (O-RAN) alliance), or it may be another network node that contributes to RAN optimization. The other network node may perform radio network optimization based at least in part on the UE assistance information. Additionally or alternatively, the other network node may send a new radio parameter configuration for radio network optimization to the RAN node 2. In this case, the other network node may send the new radio parameter configuration directly to one or both of the CUs or the DU.

The above-described example embodiments are merely examples of applications of the technical ideas obtained by the inventor. These technical ideas are not limited to the above-described example embodiments and various modifications can be made thereto.

For example, the whole or part of the example embodiments disclosed above can be described as, but not limited to, the following supplementary notes.

### (Supplementary Note 1)

A radio terminal comprising:
at least one memory; and
at least one processor coupled to the at least one memory and configured to transmit assistance information to a network, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

### (Supplementary Note 2)

The radio terminal according to Supplementary Note 1, wherein the historical data indicates a history of success or failure of mobility or beam selection by the radio terminal.

### (Supplementary Note 3)

The radio terminal according to Supplementary Note 1 or 2, wherein the one or more conditions include one or more conditions related to one or more of location, movement speed, serving beam, serving cell, and serving frequency band of the radio terminal.

### (Supplementary Note 4)

The radio terminal according to any one of Supplementary Notes 1 to 3, wherein the one or more conditions include one or more conditions related to a movement pattern of the radio terminal.

### (Supplementary Note 5)

The radio terminal according to any one of Supplementary Notes 1 to 4, wherein the one or more conditions include one or more conditions related to a network slice used by the radio terminal.

### (Supplementary Note 6)

The radio terminal according to any one of Supplementary Notes 1 to 5, wherein the one or more conditions include one or more conditions related to a radio configuration of the radio terminal.

### (Supplementary Note 7)

The radio terminal according to any one of Supplementary Notes 1 to 6, wherein the predicted data is real-time data that is sent to the network in response to the predicted data being generated, and the predicted data is used to perform inference on the first trained machine learning model.

### (Supplementary Note 8)

The radio terminal according to Supplementary Note 7, wherein the real-time data indicates a predicted location or trajectory of the radio terminal.

### (Supplementary Note 9)

The radio terminal according to Supplementary Note 7, wherein the real-time data indicates a predicted candidate target cell or candidate downlink beam.

### (Supplementary Note 10)

The radio terminal according to any one of Supplementary Notes 1 to 6, wherein the predicted data is recorded data.

### (Supplementary Note 11)

The radio terminal according to Supplementary Note 10, wherein the recorded data indicates a mobility execution timing as predicted or determined using the second trained machine learning model.

### (Supplementary Note 12)

The radio terminal according to Supplementary Note 10, wherein the recorded data indicates a downlink beam determined by beam selection using the second trained machine learning model.

### (Supplementary Note 13)

The radio terminal according to any one of Supplementary Notes 1 to 12, wherein the at least one processor is configured to:
receive control information from the network; and
transmit to the network the assistance information indicating the predicted data based on the results of the prediction or decision using the second trained machine learning model, if the control information allows.

### (Supplementary Note 14)

The radio terminal according to Supplementary Note 13, wherein
the control information indicates a condition under which transmission of the assistance information indicating the predicted data is allowed, and
the at least one processor is configured to transmit the assistance information indicating the predicted data to the network only if the condition is met.

### (Supplementary Note 15)

The radio terminal according to Supplementary Note 13, wherein
the control information indicates a condition under which collection of the predicted data is allowed, and
the at least one processor is configured to include in the assistance information only predicted data obtained when the condition is met.

### (Supplementary Note 16)

The radio terminal according to Supplementary Note 14 or 15, wherein the condition indicates a restriction with respect to at least one of a frequency band, a location, or a time.

### (Supplementary Note 17)

A method performed by a radio terminal, the method comprising:
transmitting assistance information to a network, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

### (Supplementary Note 18)

A program for causing a computer to perform a method for a radio terminal,
the method comprising transmitting assistance information to a network, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

### (Supplementary Note 19)

A radio access network node comprising:
at least one memory; and
at least one processor coupled to the at least one memory and configured to receive assistance information from a radio terminal, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

### (Supplementary Note 20)

The radio access network node according to Supplementary Note 19, wherein the historical data indicates a history of success or failure of mobility or beam selection by the radio terminal.

### (Supplementary Note 21)

The radio access network node according to Supplementary Note 19 or 20, wherein the one or more conditions include one or more conditions related to one or more of location, movement speed, serving beam, serving cell, and serving frequency band of the radio terminal.

### (Supplementary Note 22)

The radio access network node according to any one of Supplementary Notes 19 to 21, wherein the one or more conditions include one or more conditions related to a movement pattern of the radio terminal.

### (Supplementary Note 23)

The radio access network node according to any one of Supplementary Notes 19 to 22, wherein the one or more conditions include one or more conditions related to a network slice used by the radio terminal.

### (Supplementary Note 24)

The radio access network node according to any one of Supplementary Notes 19 to 23, wherein the one or more conditions include one or more conditions related to a radio configuration of the radio terminal.

### (Supplementary Note 25)

The radio access network node according to any one of Supplementary Notes 19 to 24, wherein the predicted data is real-time data that is sent to the radio access network node in response to the predicted data being generated, and the predicted data is used to perform inference on the first trained machine learning model.

### (Supplementary Note 26)

The radio access network node according to Supplementary Note 25, wherein the real-time data indicates a predicted location or trajectory of the radio terminal.

### (Supplementary Note 27)

The radio access network node according to Supplementary Note 25, wherein the real-time data indicates a predicted candidate target cell or candidate downlink beam.

### (Supplementary Note 28)

The radio access network node according to any one of Supplementary Notes 19 to 24, wherein the predicted data is recorded data and used to train the first machine learning model.

### (Supplementary Note 29)

The radio access network node according to Supplementary Note 28, wherein the recorded data indicates a mobility execution timing as predicted or determined using the second trained machine learning model.

### (Supplementary Note 30)

The radio access network node according to Supplementary Note 28, wherein the recorded data indicates a downlink beam determined by beam selection using the second trained machine learning model.

### (Supplementary Note 31)

The radio access network node according to any one of Supplementary Notes 19 to 30, wherein the at least one processor is configured to transmit control information to the radio terminal.
wherein the control information causes the radio terminal to transmit to the radio access network node the assistance information indicating the predicted data based on the results of the prediction or decision using the second trained machine learning model, if the control information allows.

### (Supplementary Note 32)

The radio access network node according to Supplementary Note 31, wherein
the control information indicates a condition under which transmission of the assistance information indicating the predicted data is allowed, and
the control information causes the radio terminal to transmit the assistance information indicating the predicted data to the radio access network node only if the condition is met.

### (Supplementary Note 33)

The radio access network node according to Supplementary Note 31, wherein
the control information indicates a condition under which collection of the predicted data is allowed, and
the control information causes the radio terminal to include in the assistance information only predicted data obtained when the condition is met.

### (Supplementary Note 34)

The radio access network node according to Supplementary Note 32 or 33, wherein the condition indicates a restriction with respect to at least one of a frequency band, a location, or a time.

### (Supplementary Note 35)

A method performed by a radio access network node, the method comprising:
receiving assistance information from a radio terminal, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

### (Supplementary Note 36)

A program for causing a computer to perform a method for a radio access network node,
the method comprising receiving assistance information from a radio terminal, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

This application is based upon and claims the benefit of priority from Japanese Patent Application No. 2021-182105, filed on November 8, 2021, the disclosure of which is incorporated herein in its entirety by reference.

### Reference Signs List

- 1: UE
- 2: RAN Node
- 603: Baseband Processor
- 604: Application Processor
- 606: Memory
- 607: Modules
- 704: Processor
- 705: Memory
- 706: Modules

## Claims

1. A radio terminal comprising:
at least one memory; and
at least one processor coupled to the at least one memory and configured to transmit assistance information to a network, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

2. The radio terminal according to claim 1, wherein the historical data indicates a history of success or failure of mobility or beam selection by the radio terminal.

3. The radio terminal according to claim 1 or 2, wherein the one or more conditions include one or more conditions related to one or more of location, movement speed, serving beam, serving cell, and serving frequency band of the radio terminal.

4. The radio terminal according to any one of claims 1 to 3,
wherein the one or more conditions include one or more conditions related to a movement pattern of the radio terminal.

5. The radio terminal according to any one of claims 1 to 4,
wherein the one or more conditions include one or more conditions related to a network slice used by the radio terminal.

6. The radio terminal according to any one of claims 1 to 5,
wherein the one or more conditions include one or more conditions related to a radio configuration of the radio terminal.

7. The radio terminal according to any one of claims 1 to 6,
wherein the predicted data is real-time data that is sent to the network in response to the predicted data being generated, and the predicted data is used to perform inference on the first trained machine learning model.

8. The radio terminal according to claim 7, wherein the real-time data indicates a predicted location or trajectory of the radio terminal.

9. The radio terminal according to claim 7, wherein the real-time data indicates a predicted candidate target cell or candidate downlink beam.

10. The radio terminal according to any one of claims 1 to 6,
wherein the predicted data is recorded data.

11. The radio terminal according to claim 10, wherein the recorded data indicates a mobility execution timing as predicted or determined using the second trained machine learning model.

12. The radio terminal according to claim 10, wherein the recorded data indicates a downlink beam determined by beam selection using the second trained machine learning model.

13. The radio terminal according to any one of claims 1 to 12,
wherein the at least one processor is configured to:
receive control information from the network; and
transmit to the network the assistance information indicating the predicted data based on the results of the prediction or decision using the second trained machine learning model, if the control information allows.

14. The radio terminal according to claim 13, wherein
the control information indicates a condition under which transmission of the assistance information indicating the predicted data is allowed, and
the at least one processor is configured to transmit the assistance information indicating the predicted data to the network only if the condition is met.

15. The radio terminal according to claim 13, wherein
the control information indicates a condition under which collection of the predicted data is allowed, and
the at least one processor is configured to include in the assistance information only predicted data obtained when the condition is met.

16. The radio terminal according to claim 14 or 15, wherein the condition indicates a restriction with respect to at least one of a frequency band, a location, or a time.

17. A method performed by a radio terminal, the method comprising:
transmitting assistance information to a network, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

18. A non-transitory computer-readable medium storing a program for causing a computer to perform a method for a radio terminal,
the method comprising transmitting assistance information to a network, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

19. A radio access network node comprising:
at least one memory; and
at least one processor coupled to the at least one memory and configured to receive assistance information from a radio terminal,
wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

20. The radio access network node according to claim 19, wherein the historical data indicates a history of success or failure of mobility or beam selection by the radio terminal.

21. The radio access network node according to claim 19 or 20,
wherein the one or more conditions include one or more conditions related to one or more of location, movement speed, serving beam, serving cell, and serving frequency band of the radio terminal.

22. The radio access network node according to any one of claims 19 to 21, wherein the one or more conditions include one or more conditions related to a movement pattern of the radio terminal.

23. The radio access network node according to any one of claims 19 to 22, wherein the one or more conditions include one or more conditions related to a network slice used by the radio terminal.

24. The radio access network node according to any one of claims 19 to 23, wherein the one or more conditions include one or more conditions related to a radio configuration of the radio terminal.

25. The radio access network node according to any one of claims 19 to 24, wherein the predicted data is real-time data that is sent to the radio access network node in response to the predicted data being generated, and the predicted data is used to perform inference on the first trained machine learning model.

26. The radio access network node according to claim 25, wherein the real-time data indicates a predicted location or trajectory of the radio terminal.

27. The radio access network node according to claim 25, wherein the real-time data indicates a predicted candidate target cell or candidate downlink beam.

28. The radio access network node according to any one of claims 19 to 24, wherein the predicted data is recorded data and used to train the first machine learning model.

29. The radio access network node according to claim 28, wherein the recorded data indicates a mobility execution timing as predicted or determined using the second trained machine learning model.

30. The radio access network node according to claim 28, wherein the recorded data indicates a downlink beam determined by beam selection using the second trained machine learning model.

31. The radio access network node according to any one of claims 19 to 30, wherein the at least one processor is configured to transmit control information to the radio terminal.
wherein the control information causes the radio terminal to transmit to the radio access network node the assistance information indicating the predicted data based on the results of the prediction or decision using the second trained machine learning model, if the control information allows.

32. The radio access network node according to claim 31, wherein
the control information indicates a condition under which transmission of the assistance information indicating the predicted data is allowed, and
the control information causes the radio terminal to transmit the assistance information indicating the predicted data to the radio access network node only if the condition is met.

33. The radio access network node according to claim 31, wherein
the control information indicates a condition under which collection of the predicted data is allowed, and
the control information causes the radio terminal to include in the assistance information only predicted data obtained when the condition is met.

34. The radio access network node according to claim 32 or 33,
wherein the condition indicates a restriction with respect to at least one of a frequency band, a location, or a time.

35. A method performed by a radio access network node, the method comprising:
receiving assistance information from a radio terminal, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.

36. A non-transitory computer-readable medium storing a program for causing a computer to perform a method for a radio access network node,
the method comprising receiving assistance information from a radio terminal, wherein
the assistance information is used to train a first machine learning model related to radio access network optimization or to perform inference on a first trained machine learning model related to radio access network optimization,
the assistance information includes one or both of statistical data and predicted data,
the statistical data indicates a subset of historical data of a given event, extracted by filtering the historical data by one or more conditions, and
the predicted data is generated by the radio terminal by prediction or decision using a second trained machine learning model.
